# EUROPEAN PATENT APPLICATION

(11) **EP 4 636 377 A1**
(43) Date of publication of application: **22.10.2025**
(21) Application number: 23903133.9
(22) Date of filing: 30.10.2023
(51) Int. Cl.: G01M 17/02

(54) **TIRE INSPECTION DEVICE AND TIRE INSPECTION METHOD**

(30) Priority: 13.12.2022 JP 2022198920
(71) Applicant: BRIDGESTONE CORPORATION, Chuo-ku Tokyo 104-8340 (JP)
(72) Inventor: KAMADA, Takehito, Tokyo 104-8340 (JP); ITO, Yujiro, Tokyo 104-8340 (JP); HOSHINO, Hironori, Tokyo 104-8340 (JP)
(74) Representative: Marks & Clerk LLP
(86) International application number: PCT/JP2023/039107
(87) International publication number: WO 2024/127835

(57) **Abstract**

A tire inspection device (10) is a tire inspection device configured to determine whether a tire including a transmitter (31) is retreadable, comprising: an acquisition unit (131) configured to acquire tire management data including tire ID information of each registered tire; and a determination unit (132) configured to, after an inspection target tire to be inspected among the tires is determined to pass a voltage inspection, perform a reading inspection on the inspection target tire based on the tire management data and tire ID information read from a transmitter built in the inspection target tire, and, if determining that the inspection target tire passes the reading inspection, determine that the inspection target tire is retreadable.

## Description

### TECHNICAL FIELD

The present disclosure relates to a tire inspection device and a tire inspection method.

### BACKGROUND

In recent years, electronic devices such as transmitters are sometimes attached to tires for individual tire identification and the like. When inspecting such tires, there may be a need to protect the electronic devices from damage. For example, Patent Literature (PTL) 1 discloses a method using an insulation protection structure that is placed perpendicular to the inner surface of a tire and physically protects an electronic device from contact with wires that can discharge high voltage.

### CITATION LIST

### Patent Literature

PTL 1: JP 2011-81018 A

### SUMMARY

### (Technical Problem)

However, the technology in PTL 1 requires preparing a plurality of insulation protection structures, for example, in the case where the tire has a plurality of built-in electronic devices. Since each of the insulation protection structures needs to be appropriately positioned, inspection efficiency is impaired. Moreover, in the case of reusing tires by retreading or the like, their transmitters need not necessarily be reused as well. There is thus a demand for a technology that can more accurately inspect whether transmitters built in tires are faulty.

It could therefore be helpful to provide a tire inspection device and tire inspection method that can appropriately determine whether tires having transmitters built in are retreadable.

### (Solution to Problem)

(1) A tire inspection device according to one embodiment of the present disclosure is a tire inspection device configured to determine whether tires having transmitters built in are retreadable, the tire inspection device comprising: an acquisition unit configured to acquire tire management data including tire ID information of each registered tire; and a determination unit configured to, after an inspection target tire to be inspected among the tires is determined to pass a voltage inspection, perform a reading inspection on the inspection target tire based on the tire management data and tire ID information read from a transmitter built in the inspection target tire, and, if determining that the inspection target tire passes the reading inspection, determine that the inspection target tire is retreadable.
(2) As one embodiment of the present disclosure, in (1), the determination unit is configured to determine in the reading inspection whether the inspection target tire has been registered, and determine that the inspection target tire passes the reading inspection if the inspection target tire has been registered.
(3) As one embodiment of the present disclosure, in (2), when the transmitter built in the inspection target tire comprises a plurality of transmitters, the determination unit is configured to determine that the inspection target tire passes the reading inspection if all tire ID information read from the plurality of transmitters match.
(4) As one embodiment of the present disclosure, in any one of (1) to (3), the determination unit is configured to determine that the inspection target tire passes the reading inspection if the tire ID information before the voltage inspection and the tire ID information after the voltage inspection match.
(5) As one embodiment of the present disclosure, in any one of (1) to (4), the tire inspection device comprises an output unit configured to output a result of determination by the determination unit, and the output unit is configured to output a message suggesting using an alternative, if the determination unit determines that the inspection target tire is not retreadable.
(6) As one embodiment of the present disclosure, in (5), the message includes a suggestion to write a code that disables the transmitter.
(7) As one embodiment of the present disclosure, in (6), the message includes a suggestion to place the inspection target tire in an electromagnetic field.
(8) A tire inspection method according to one embodiment of the present disclosure is a tire inspection method executed by a tire inspection device that determines whether tires having transmitters built in are retreadable, the tire inspection method comprising: acquiring tire management data including tire ID information of each registered tire; and after an inspection target tire to be inspected among the tires is determined to pass a voltage inspection, performing a reading inspection on the inspection target tire based on the tire management data and tire ID information read from a transmitter built in the inspection target tire, and, if determining that the inspection target tire passes the reading inspection, determining that the inspection target tire is retreadable.

### (Advantageous Effect)

It is thus possible to provide a tire inspection device and tire inspection method that can appropriately determine whether tires having transmitters built in are retreadable.

### BRIEF DESCRIPTION OF THE DRAWINGS

In the accompanying drawings:
FIG. 1 is a diagram illustrating an example of the structure of a tire inspection system including a tire inspection device according to one embodiment of the present disclosure;
FIG. 2 is a diagram for explaining tire management data; and
FIG. 3 is a flowchart illustrating an example of processing of a tire inspection method executed by the tire inspection device.

### DETAILED DESCRIPTION

A tire inspection device and tire inspection method according to one embodiment of the present disclosure will be described below with reference to the drawings. In the drawings, the same or corresponding parts are given the same reference signs. In the description of this embodiment, the description of the same or corresponding parts will be omitted or simplified as appropriate.

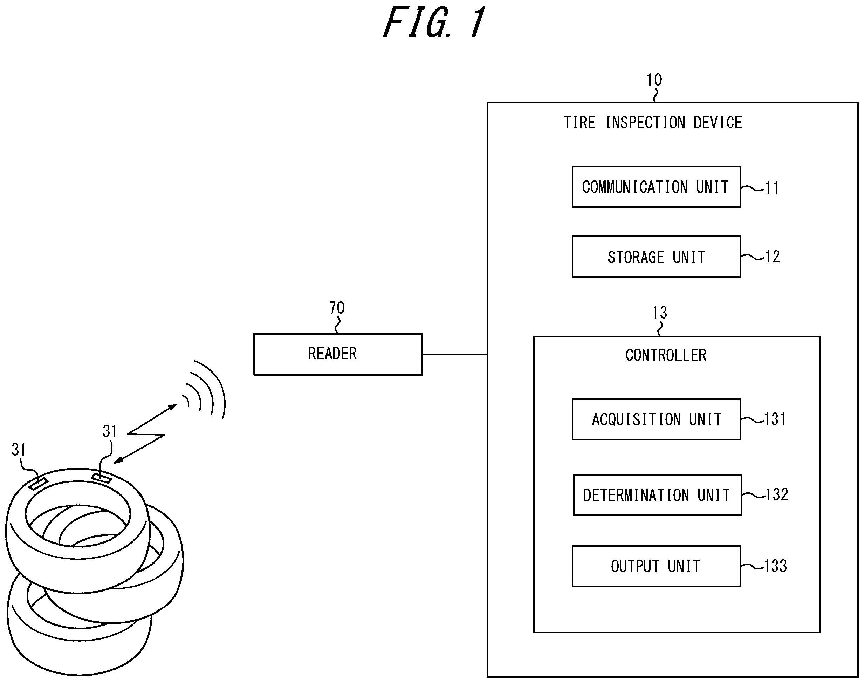

FIG. 1 illustrates an example of the structure of a tire inspection system including a tire inspection device 10 according to this embodiment. The tire inspection device 10 inspects tires. The tires managed by the tire inspection device 10 are not limited to specific ones, and may include, for example, large off the road (OR) tires. In this embodiment, the tires are for vehicles such as passenger vehicles, trucks, buses, and construction vehicles, but may also be for aircraft.

The tire inspection device 10 includes a communication unit 11, a storage unit 12, and a controller 13. The controller 13 includes an acquisition unit 131, a determination unit 132, and an output unit 133. The tire inspection device 10 may be, for example, a computer as a hardware structure. The components of the tire inspection device 10 will be described in detail later.

In this embodiment, the tire inspection device 10 is a computer at a site where tires are retreaded and repaired (hereinafter, "repair site"). Retreading is a process of removing the surface of the tread rubber of a tire and attaching new rubber to reuse the tire. The part of the tire excluding the tread portion that is replaced by retreading is also referred to as "tire casing" (base tire). The use of retreaded tires contributes to resource saving because tire casings are reused. The tire inspection device 10 determines whether tires having built-in transmitters 31 are retreadable (described in detail later). Repairing a tire at the repair site includes, for example, attaching a replacement for a faulty transmitter 31 to the tire, and disabling the faulty transmitter 31. A tire that is inspected at the repair site to determine whether it is retreadable is hereinafter referred to as "inspection target tire".

A reader 70 is a device that reads tire ID information from the transmitter 31 attached to each tire. The tire ID information is identification information unique to each tire. The tire inspection device 10 forms the tire inspection system together with at least the reader 70. One or more devices (hereinafter, "external devices") other than the tire inspection device 10 may be installed at the repair site. The tire inspection device 10 may form the tire inspection system also together with one or more external devices connected via a network. The network is, for example, the Internet. The network may also include a local area network (LAN) in part. In this embodiment, the external devices include a high-voltage device. The high-voltage device performs a voltage inspection that involves applying a high voltage to a tire and non-destructively inspecting whether there is a through flaw. In the voltage inspection, if there is a through flaw, a spark is generated and a current flows. Hence, the tire passes the voltage inspection if no current flows. The tire inspection device 10 can receive the pass/fail result of the voltage inspection from the high-voltage device via the network.

The transmitter 31 is built in (included in) the tire. Examples of building the transmitter 31 in the tire include embedding the transmitter 31 inside the tire and attaching the transmitter 31 to the inner surface of the tire. The transmitter 31 may be attached to any surface other than the inner surface of the tire where the transmitter 31 is hard to detach from the tire and is unaffected by contact between the tire and the road surface. The transmitter 31 transmits a predetermined signal. The predetermined signal includes at least the tire ID information of the tire to which the transmitter 31 is attached. The predetermined signal may further include production information of the tire such as production date and production place. The transmitter 31 may be an RFID tag as in this embodiment, but is not limited to a specific type of device as long as it transmits the predetermined signal. The RFID tag exchanges information with a reader device by wireless communication over a short distance (about several centimeters to several meters) using electromagnetic fields, radio waves, etc. In this embodiment, the reader 70 is an RFID tag reader device. The number of transmitters 31 built in the tire may be one or more. The manner in which the tire ID information is read from the transmitter 31 is not limited to obtaining the tire ID information directly from the transmitter 31. For example, the reading of the tire ID information from the transmitter 31 also includes the case where the transmitter 31 transmits identification information that is unique to the transmitter 31 and is associated with specific tire ID information and the reader 70 or the controller 13 replaces the identification information with the tire ID information.

Since the voltage inspection is performed by applying a high voltage to the tire, the high voltage may cause the transmitter 31 to be faulty. If the faulty transmitter 31 is left as it is, problems may arise such as the tire ID information being unable to be read or incorrect tire ID information being read during inspection after the tire is shipped as a retreaded tire. In view of this, the tire inspection device 10 performs a reading inspection on the transmitter 31 after the voltage inspection, and determines the tire to pass the reading inspection only if the tire has no faulty transmitter 31.

In the tire inspection system, the tire inspection device 10 may be integrated with one or more external devices. For example, the tire inspection device 10 may also function as the high-voltage device and perform the voltage inspection. The tire inspection device 10 may be capable of communicating with a small computer device and the like via the network and may display the inspection results, etc. on a display of the small computer device. Examples of the small computer device include mobile terminals such as smartphones and tablet terminals.

The components of the tire inspection device 10 will be described in detail below. The communication unit 11 includes one or more communication modules connected to the network. The communication unit 11 may include, for example, a communication module compatible with a mobile communication standard such as 4G (4th Generation) or 5G (5th Generation). The communication unit 11 may include, for example, a communication module compatible with a wireless LAN standard (e.g. IEEE 802.11). The communication unit 11 may include, for example, a communication module compatible with a wired LAN standard.

The storage unit 12 is at least one memory. Examples of the memory include a semiconductor memory, a magnetic memory, and an optical memory, but the memory is not limited to such and may be any memory. The storage unit 12 is included in the tire inspection device 10, for example. Alternatively, the storage unit 12 may be an external storage accessed by the tire inspection device 10 via any interface.

The storage unit 12 stores various data used in various calculations executed by the controller 13. The storage unit 12 may also store results and intermediate data of various calculations executed by the controller 13.

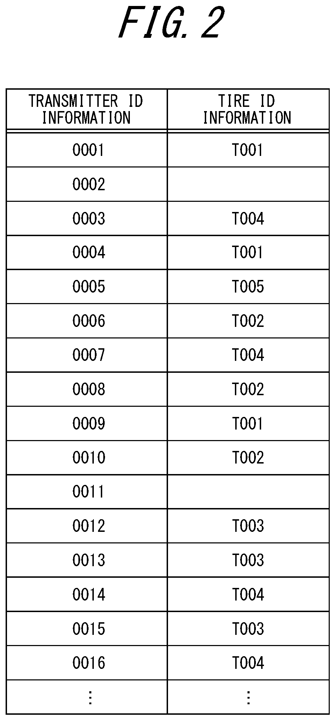

In this embodiment, the storage unit 12 stores tire management data including tire ID information of each registered tire. Herein, "registered" means that tire ID information read from at least one transmitter 31 is known and the association between the transmitter 31 and the tire ID information is known. FIG. 2 illustrates an example of the tire management data. In the example in FIG. 2, the tire management data is a table indicating the correspondence between transmitter ID information and tire ID information. The transmitter ID information is identification information unique to each transmitter 31 (RFID tag in this embodiment). In the example in FIG. 2, tires with tire ID information T001 to T005 are registered tires and their existence has been recognized. For example, the tire with tire ID information T005 has one built-in RFID tag with transmitter ID information 0005, and the tire with tire ID information T001 has three built-in RFID tags with transmitter ID information 0001, 0004, and 0009. RFID tags with transmitter ID information 0002 and 0011 are unused or unusable, and their fields are blank because they are not associated with any tire ID information.

In the case where a new transmitter 31 is built into a tire as a result of production, repair, or the like, the tire ID information of the tire is associated with the transmitter ID information of the new transmitter 31. The tire management data may be updated periodically or non-periodically, for example. For example, the tire inspection device 10 may update the tire management data in the case where a new transmitter 31 is built into a tire at the repair site. The update may be performed through input by a worker at the repair site using an input device (e.g. a keyboard and a mouse) in the tire inspection device 10. For example, the tire inspection device 10 may access a computer at a tire production site via a network to obtain information of association between transmitter ID information and tire ID information of a newly produced tire. The tire management data is not limited to the form, etc. illustrated in FIG. 2, and for example, another item (e.g. tire type) may be added.

The controller 13 is at least one processor. Examples of the processor include a general-purpose processor and a dedicated processor specialized for specific processing, but the processor is not limited to such and may be any processor. The controller 13 controls the overall operation of the tire inspection device 10.

The tire inspection device 10 may have the following software structure. At least one program used for controlling the operation of the tire inspection device 10 is stored in the storage unit 12. When the program stored in the storage unit 12 is read by the processor in the controller 13, the program causes the processor to function as the acquisition unit 131, the determination unit 132, and the output unit 133.

The acquisition unit 131 acquires the tire management data. Moreover, in the case where the voltage inspection is performed on an inspection target tire to be inspected, the acquisition unit 131 may acquire the result of the voltage inspection from the high-voltage device. In this embodiment, the acquisition unit 131 acquires the tire management data after acquiring the result of the voltage inspection. Alternatively, the acquisition unit 131 may acquire the tire management data before acquiring the result of the voltage inspection. The acquisition unit 131 also acquires tire ID information read from the transmitter 31 built in the inspection target tire. In other words, the acquisition unit 131 acquires the tire ID information of the inspection target tire read by the reader 70.

After the inspection target tire is determined to pass the voltage inspection, the determination unit 132 performs the reading inspection based on the tire management data and the tire ID information read from the transmitter 31 built in the inspection target tire. If the determination unit 132 determines that the inspection target tire passes the reading inspection, the determination unit 132 determines that the inspection target tire is retreadable. By performing the reading inspection after the inspection target tire is determined to pass the voltage inspection, it is possible to appropriately determine whether the tire having the built-in transmitter 31 that is affected by high voltage is retreadable.

Here, the determination unit 132 may determine in the reading inspection whether the inspection target tire has been registered, and, if the inspection target tire has been registered, determine that the inspection target tire passes the reading inspection. If the transmitter 31 is normal, the tire ID information read from the transmitter 31 indicates one of the registered tires. Therefore, by setting the condition for passing the reading inspection to be that the inspection target tire has been registered, it is possible to accurately inspect whether the transmitter 31 is faulty due to the voltage inspection. In the example in FIG. 2, in the case where the inspection target tire has a built-in transmitter 31 whose transmitter ID information is one of 0001 to 0016, if the transmitter 31 is normal, the tire ID information is one of T001 to T005. In this example, if the tire ID information is not one of T001 to T005, the determination unit 132 can determine that the inspection target tire fails the reading inspection.

Moreover, in the case where the inspection target tire has a plurality of built-in transmitters 31, the determination unit 132 may determine that the inspection target tire passes the reading inspection if all tire ID information read from the plurality of transmitters 31 match. In other words, if the tire ID information read from at least one transmitter 31 does not match the other tire ID information, the determination unit 132 can immediately determine that the inspection target tire fails the reading inspection. By setting the condition for passing the reading inspection to be that all tire ID information read from the plurality of transmitters 31 match, it is possible to efficiently inspect whether the transmitter 31 is faulty due to the voltage inspection. In the example in FIG. 2, in the case where the inspection target tire has three built-in transmitters 31 with transmitter ID information 0001, 0004, and 0009, if the transmitters 31 are normal, all tire ID information are T001. In this example, if the tire ID information from at least one transmitter 31 is not T001, the determination unit 132 can determine that the inspection target tire fails the reading inspection. In this example, there is a possibility that all transmitters 31 transmit matching incorrect tire ID information (a value other than T001) by chance. Accordingly, when high accuracy is required, it is preferable that the condition for passing the reading inspection also includes that the inspection target tire has been registered. In detail, in the case where the inspection target tire has a plurality of built-in transmitters 31, the determination unit 132 preferably determines that the inspection target tire passes the reading inspection if all tire ID information read from the plurality of transmitters 31 match and the inspection target tire has been registered. Here, it is preferable that the value of transmitter ID information and the value of tire ID information are set using random numbers or the like so that accidental coincidence will not occur.

The determination unit 132 may determine that the inspection target tire passes the reading inspection if the tire ID information before the voltage inspection and the tire ID information after the voltage inspection match. By setting the condition for passing the reading inspection to be that the tire ID information read before the voltage inspection and the tire ID information read after the voltage inspection match, it is possible to more accurately inspect whether the transmitter 31 is faulty due to the voltage inspection. In this example, there is a possibility that the transmitter 31 has already been faulty before the voltage inspection and the tire ID information read before the voltage inspection and the tire ID information read after the voltage inspection are both incorrect and match. Accordingly, when high accuracy is required, it is preferable that the condition for passing the reading inspection also includes at least one of that the inspection target tire has been registered and that all tire ID information read from the plurality of transmitters 31 match.

The output unit 133 outputs the result of determination by the determination unit 132 (i.e. the pass/fail result of the reading inspection, etc.) to a display device or the like. For example, a display connected to the tire inspection device 10 can function as a display device that displays the determination result.

If the determination unit 132 determines that the inspection target tire is not retreadable, the output unit 133 outputs a message suggesting using an alternative. The alternative may be a new transmitter 31 (RFID tag) that replaces the faulty transmitter 31, a stick-on (patch-type) transmitter 31, or a two-dimensional barcode containing the tire ID information. The worker at the repair site can promptly take appropriate action in accordance with such a message.

The message may include a suggestion to write a code that disables the transmitter 31. In other words, the worker at the repair site may be informed of a method for reliably disabling the faulty transmitter 31. In accordance with such a message, the faulty transmitter 31 can be prevented from causing adverse effects.

The message may include a suggestion to place the inspection target tire in an electromagnetic field. The electromagnetic field may be strong enough to erase or destroy the information held by the transmitter 31. In accordance with such a message, the faulty transmitter 31 can be further prevented from causing adverse effects.

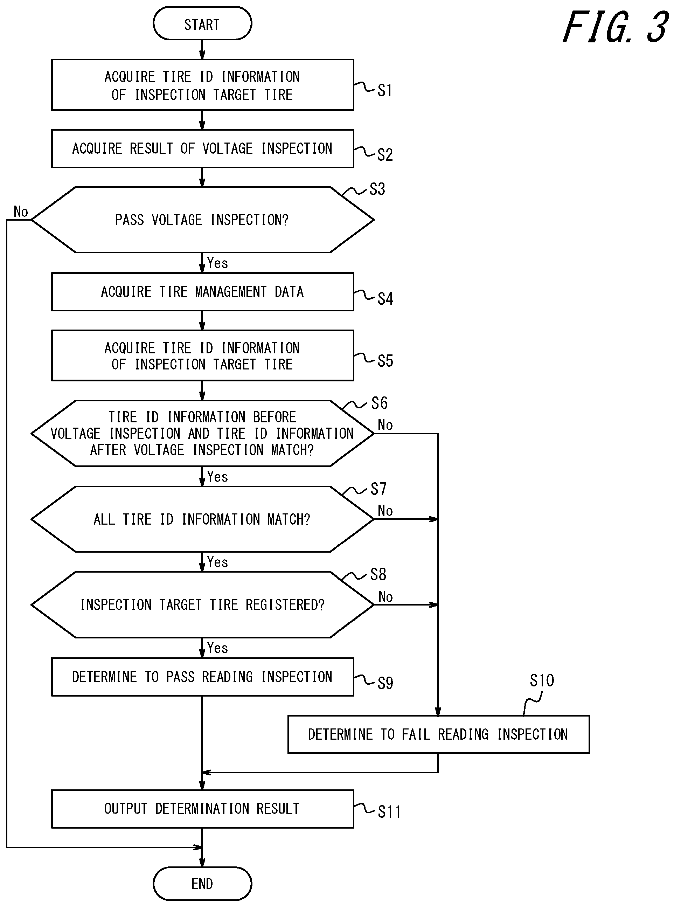

FIG. 3 is a flowchart illustrating an example of processing of a tire inspection method executed by the controller 13 in the tire inspection device 10. The processing of the tire inspection method may be started when the inspection target tire is transported to the repair site.

The acquisition unit 131 acquires the tire ID information of the inspection target tire read by the reader 70, before the voltage inspection is performed on the inspection target tire (step S1). Step S1 may be omitted in the case where the determination unit 132 does not determine whether the tire ID information before the voltage inspection and the tire ID information after the voltage inspection match.

In the case where the voltage inspection is performed on the inspection target tire, the acquisition unit 131 acquires the result of the voltage inspection from the high-voltage device (step S2). Here, the controller 13 may instruct the high-voltage device to perform the voltage inspection via the network, and then acquire the result of the voltage inspection. In other words, the controller 13 may control the timing of inspection, including the voltage inspection, to determine whether the inspection target tire is retreadable.

If the result of the voltage inspection is pass (step S3: Yes), the controller 13 proceeds to the process of step S4 and performs the reading inspection. If the result of the voltage inspection is not pass (step S3: No), that is, if the result of the voltage inspection is fail, the controller 13 ends the processing without performing the reading inspection. If the result of the voltage inspection is not pass, the output unit 133 may output, to a display device or the like, a message that the inspection target tire fails the voltage inspection, before ending the processing.

If the result of the voltage inspection is pass, the acquisition unit 131 acquires the tire management data from the storage unit 12 (step S4). Alternatively, the acquisition unit 131 may acquire the tire management data before acquiring the result of the voltage inspection.

The acquisition unit 131 acquires the tire ID information of the inspection target tire read by the reader 70, after the voltage inspection is performed on the inspection target tire (step S5).

If the tire ID information before the voltage inspection and the tire ID information after the voltage inspection do not match (step S6: No), the determination unit 132 determines that the inspection target tire fails the reading inspection (step S10). If the tire ID information before the voltage inspection and the tire ID information after the voltage inspection match (step S6: Yes), the determination unit 132 proceeds to the process of step S7. Step S6 may be omitted in the case where the determination unit 132 does not determine whether the tire ID information before the voltage inspection and the tire ID information after the voltage inspection match.

If the inspection target tire has a plurality of transmitters 31 built in and all tire ID information read from the plurality of transmitters 31 do not match, i.e. if the tire ID information read from at least one transmitter 31 is different (step S7: No), the determination unit 132 determines that the inspection target tire fails the reading inspection (step S10). If the inspection target tire has a plurality of transmitters 31 built in and all tire ID information read from the plurality of transmitters 31 match (step S7: Yes), the determination unit 132 proceeds to the process of step S8. Step S7 may be omitted in the case where the number of transmitters 31 built in the inspection target tire is one.

If the inspection target tire has not been registered based on the tire management data and the tire ID information after the voltage inspection (step S8: No), the determination unit 132 determines that the inspection target tire fails the reading inspection (step S10). If the inspection target tire has been registered (step S8: Yes), the determination unit 132 determines that the inspection target tire passes the reading inspection (step S9). In this case, the inspection target tire is determined to be retreadable.

The output unit 133 outputs the result of determination by the determination unit 132 to a display device or the like (step S11). The output unit 133 outputs at least the pass/fail result of the reading inspection as the determination result. If the inspection target tire fails the reading inspection, the output unit 133 may output a message suggesting using an alternative.

As described above, the tire inspection device 10 and the tire inspection method according to this embodiment with the foregoing structure can appropriately determine whether a tire having one or more transmitters 31 built in is retreadable by performing the reading inspection using the tire ID information of the inspection target tire. The tire inspection device 10 and the tire inspection method according to this embodiment do not require a special tool such as the insulation protection structure of the conventional technology in the inspection to determine whether the tire is retreadable.

Although an embodiment of the present disclosure has been described by way of the drawings and examples, various changes or modifications may be easily made by those of ordinary skill in the art based on the present disclosure. Such various changes or modifications are therefore included in the scope of the present disclosure. For example, the functions included in the components, steps, etc. may be rearranged without logical inconsistency, and a plurality of components, steps, etc. may be combined into one component, step, etc. and a component, step, etc. may be divided into a plurality of components, steps, etc. The embodiment of the present disclosure can also be implemented as a program executed by a processor included in a device or a storage medium storing such a program, which are also included in the scope of the present disclosure.

### REFERENCE SIGNS LIST

- 10: tire inspection device
- 11: communication unit
- 12: storage unit
- 13: controller
- 31: transmitter
- 70: reader
- 131: acquisition unit
- 132: determination unit
- 133: output unit

## Claims

1. A tire inspection device configured to determine whether tires having transmitters built in are retreadable, the tire inspection device comprising:
an acquisition unit configured to acquire tire management data including tire ID information of each registered tire; and
a determination unit configured to, after an inspection target tire to be inspected among the tires is determined to pass a voltage inspection, perform a reading inspection on the inspection target tire based on the tire management data and tire ID information read from a transmitter built in the inspection target tire, and, if determining that the inspection target tire passes the reading inspection, determine that the inspection target tire is retreadable.

2. The tire inspection device according to claim 1, wherein the determination unit is configured to determine in the reading inspection whether the inspection target tire has been registered, and determine that the inspection target tire passes the reading inspection if the inspection target tire has been registered.

3. The tire inspection device according to claim 2, wherein when the transmitter built in the inspection target tire comprises a plurality of transmitters, the determination unit is configured to determine that the inspection target tire passes the reading inspection if all tire ID information read from the plurality of transmitters match.

4. The tire inspection device according to any one of claims 1 to 3, wherein the determination unit is configured to determine that the inspection target tire passes the reading inspection if the tire ID information before the voltage inspection and the tire ID information after the voltage inspection match.

5. The tire inspection device according to any one of claims 1 to 4, comprising an output unit configured to output a result of determination by the determination unit,
wherein the output unit is configured to output a message suggesting using an alternative, if the determination unit determines that the inspection target tire is not retreadable.

6. The tire inspection device according to claim 5, wherein the message includes a suggestion to write a code that disables the transmitter.

7. The tire inspection device according to claim 6, wherein the message includes a suggestion to place the inspection target tire in an electromagnetic field.

8. A tire inspection method executed by a tire inspection device that determines whether tires having transmitters built in are retreadable, the tire inspection method comprising:
acquiring tire management data including tire ID information of each registered tire; and
after an inspection target tire to be inspected among the tires is determined to pass a voltage inspection, performing a reading inspection on the inspection target tire based on the tire management data and tire ID information read from a transmitter built in the inspection target tire, and, if determining that the inspection target tire passes the reading inspection, determining that the inspection target tire is retreadable.
